Europäisches Patentamt

European Patent Office

Office européen des brevets

(11) Publication number: **0 197 678**
**A1**

## (12) EUROPEAN PATENT APPLICATION

(21) Application number: **86301907.1**

(22) Date of filing: **17.03.86**

(51) Int. Cl.⁴: **B 60 T 15/06**

(30) Priority: **21.03.85 GB 8507331**

(43) Date of publication of application:
**15.10.86 Bulletin 86/42**

(84) Designated Contracting States:
**AT BE CH DE FR IT LI NL SE**

(71) Applicant: **BENDIX LIMITED**
**Douglas Road**
**Kingswood, Bristol BS15 2NL(GB)**

(72) Inventor: **Fogg, Stephen Walter**
**37 Millmead Road**
**Bath BS2 3JP(GB)**

(74) Representative: **Turner, Alan Reginald**
**BENDIX LIMITED Douglas Road**
**Kingswood, Bristol BS15 2NL(GB)**

(54) Two circuit fluid pressure control valves.

(57) A dual circuit foot valve for a compressed air braking system has a plunger (38) which acts through a spring (39) on a first piston (6) which carries an exhaust seat for a first double valve controlling the supply of pressure from an input port (27) to a first circuit delivery port (28), the delivered pressure at (28) acting beneath the piston 6 in a sense to cause lapping of the valve and also acting above a second piston (16) which similarly acts as a control piston for a further double valve controlling the supply of pressure from an input port (29) to a second circuit delivery port (30), a frictional reaction linkage (50) being provided between the plunger and the second piston operable in a sense to reduce the differential between the pressures at the delivery ports.

FIG.1

Two Circuit Fluid Pressure Control Valves.

This invention relates to a two-circuit fluid pressure control valve.

Two-circuit pressure fluid control valves are used in heavy road vehicles for controlling compressed air control pressures to independent braking circuits of compressed air braking systems or air-over hydraulic braking systems. Typical such dual circuit valves comprise a control member controlling a first self-lapping air pressure control valve the delivered pressure of which not only appears at a first fluid pressure output port but also is applied to a relay piston of a second self lapping fluid pressure control valve to deliver an output pressure at a second fluid pressure output port. Such dual circuit valves tend to be rather complex in construction owing to the need to arrange for the relay piston to be sensitive not only to the output pressure of the first valve but also to the movement of the control member.

The object of the present invention is to provide such a two circuit fluid pressure control valve of improved construction.

According to the present invention there is provided a two-circuit fluid pressure control valve having a housing containing an input member acting via first resilient coupling means upon a first fluid pressure responsive member a first double valve operable in dependence upon

the position of said pressure responsive member to alternatively connect a first output port to an input port or to a vent the pressure at said first output port acting on said first pressure responsive member in a sense to oppose the action of the resilient coupling means and also acting on a second pressure responsive member a second double valve operable dependent upon the position of said second pressure responsive member to alternatively connect a second output port to an input port or to a vent the pressure at said second output port acting on said second pressure responsive member in a sense to oppose the action thereon of the pressure at the first output port and further resilient coupling means operable only after an initial movement of the control member to apply a mechanical force from the input member to the second pressure responsive member in a sense to operate the second valve to connect the respective input port to the second output port.

In order that the present invention may be clearly understood and readily carried into effect, the same will be further described by way of example with reference to the accompanying drawing of which

Fig. 1 illustrates in diagrammatic sectional form a two-circuit air pressure control valve for a multi-circuit fluid pressure operable braking system and,

Fig. 2 shows a plot of control member against output pressure.

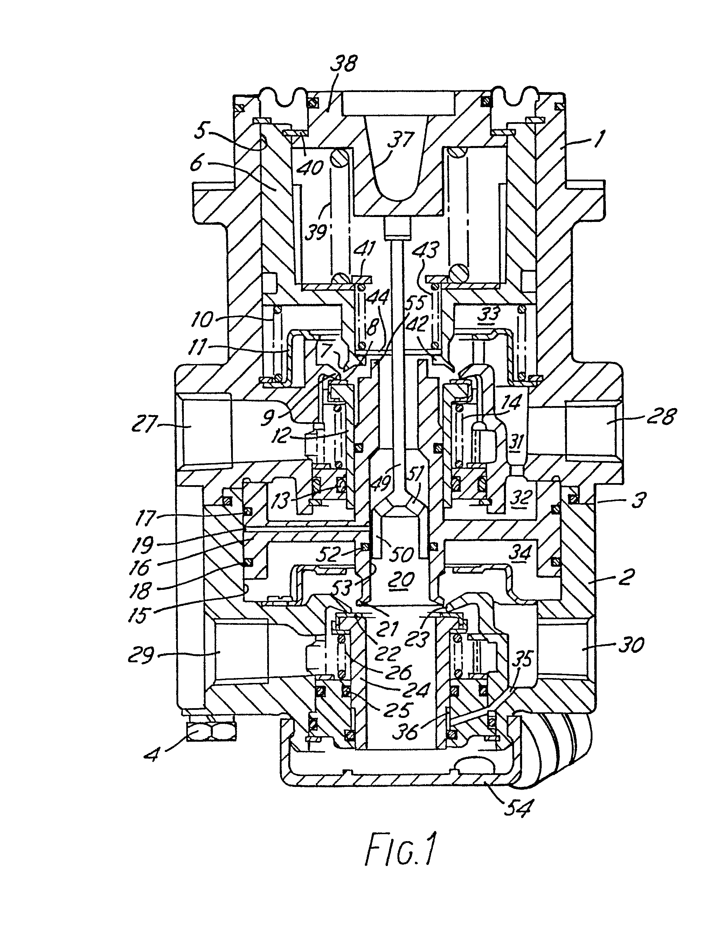

Referring to Fig. 1 the dual fluid pressure control valve shown therein is intended to be suitable for use as a foot operable control valve for controlling independent compressed air operable service brake circuits of a heavy roady vehicle. The assembly comprises first and second housing parts 1 and 2 bolted together with a seal at 3 by means of suitably located bolts such as 4. Sealingly slideable within a cylindrical bore 5 of the uppermost part 1, there is a first pressure responsive member 6 carrying a exhaust valve seat 7 of a self-lapping double valve having a valve member 8 and an inlet valve seat 9 formed in the housing. The pressure responsive member 6 is upwardly urged by means of a spring 10 captive between 6 and the housing with a baffle 11. The valve member 8 is carried on a tubular element 12 which itself is sealingly slideable through a seal member 13 retained in the housing and is urged by a light spring 14 towards the position as shown wherein 8 is in engagement with seat 9.

Sealingly slideable within the lower part 2 of the housing in a cylindrical bore 15 thereof there is a further pressure responsive member in the form of a piston 16 provided with double seals 17 and 18 the space between which is vented via a small passage 19 into the central vented region 20 the assembly. The piston 16 has a downward projection carrying an exhaust valve seat 21 of a further double valve with a valve member 22 and an inlet valve seat 23 formed in the housing. The valve member 22 is carried on a tubular element 24 slideable in the housing through a seal member 25 retained in

the housing and 24 is upwardly urged by a light spring 26 towards engagement with inlet seat 23.

The first double valve comprising valve member 8 and seats 7 and 9 is arranged to received fluid pressure from an input port 27 and dependent upon operation of the valve to deliver output pressure at a first output port 30. This pressure is effective in the region 34 under the piston 16 and via a passage 35 under a blancing area 36 of the valve element 24.

The whole assembly is operated by a driver's foot pedal, now shown, but which is engageable with a socket 37 formed in an input member in the form of a plunger 38 which is slideable within the piston 6. This plunger 38 is upwardly urged towards an internal circlip 40 in piston 6 by a spring 39 comprising a first resilient means. The lower end of the spring 39 rests against a washer 41 between which and a should of 42 of piston 6 a spring 43 and a washer 44 are retained. As will be seen the spring 43 constitutes a further resilient means in accordance with the invention in that the washer 44 is engageable by an upward projection 55 carried on a central portion of the piston 16 which is sealingly slideable in element 12.

Extending downwardly from the centre of the plunger 38 and connected thereto is a rod 49 of a frictional link with a widened lower end part 50 having through passages 51 and being slideable within a tightly fitting 'O' ring 52

retained in the central bore 53 of the lower pressure responsive member 16. As seen the rod 49 passes with good venting clearance through the centre of the assembly and is freely moveable therein subject to the intentional fricational engagement with the 'O' ring 52. .The lower end of the assembly is covered by a suitable vent cap 54.

In operation of the dual foot valve shown in Fig. 1, respective fluid pressure reservoirs are connected at first and second input ports 27 and 29 and discreet service brake circuits for a vehicle are connected at first and second output ports 28 and 30 respectively. In the position shown the driver's foot pedal is unoperated and the plunger 38 is in its uppermost postion as determined by the action of the spring 10 and 39. In this position the output ports 28 and 30 are vented via the respective open exhaust valve seats 7 and 21 to the central vented region 20. Upon operation of the driver's foot pedal the plunger 38 is moved downwards initially carrying the piston 6 with it, by virtue of spring 39, such as to cause engagement between washer 44 and the upper end of extension 55 tending to urge the relay piston 16 downwards. More or less simultaneous engagement then takes place with the respective exhaust valve seats of the double valves, followed by the generation of some output pressure at the port 28 and transmission thereof via passage 31, to the region 32 above piston 16. This causes unseating of the inlet valve from seat 23 resulting in corresponding elevation of output pressure

0197678

at port 30. The build-up of pressure at the first output port 28 is communicated to the region 33 under the first pressure responsive member 36 which is thereby deflected upwards towards the displaced plunger 38 against the action of spring 39 and the first double valve is able to adopt a lapped position in known manner. Similarly, the build-up of pressure at the second output port 30 is communicated to the region 34 beneath the piston 16 causing upward movement thereof against the action of spring 43 and enabling the second double valve member 21 to adopt a lapped position with seals 21 and 23. In such lapped positions the respective valve elements are engaged with their inlet and exhaust valve seats in each case.

Further downward movement of the plunger 38 will result in enhanced pressures at output ports 28 and 30 accompanied by increased compression of spring 39 and increased foot pedal reaction. Upward movement of the plunger 38 will result in the pressure in region 33 urging piston 6 upwards with resultant partial venting thereof together with the pressure in region 32. The relay piston 16 is thus also unbalanced resulting in partial venting of the output pressure at output 30.

Owing to frictional effects of the seals 17 and 18 of the relay piston 16, there is hysteresis associated with this pressure responsive member which could result in an undesireable differential between the output pressures at the first and second output ports 28 and 30.

0197678

Such differential is usually noteable for the manner in which it changes depending upon whether one is considering air increasing or decreasing pressure displacement characteristic for the assembly. By virtue however of the widened portion 50 carried by the rod 49 and connected to the plunger 38, an added force is applied to the relay piston 18 up to the value of limiting friction at 'O' ring 52 and such added force is in a sense to oppose or compensate for frictional resistance presented by seals 17 and 18 in the bore 15. This therefore reduces the mentioned hysteresis.

It will be seen from the foregoing that a further resilient means in the form of spring 43 acts between the control member 38 and the second piston 16. The spring 43 normally does not affect the balance of the system of forces since it is contained between a shoulder 52 and a member 41 and only comes into operation following an engagement by the upper end 55 of the relay piston 16. The force of the spring 43 is suitably chosen to approximate to half the load presented to seat 21 of the piston 16 by the second double valve element 24. It thus ensures engagement of the exhaust valve seat 21 by urging the piston 16 downwards, assisted as described by the friction action of part 50.

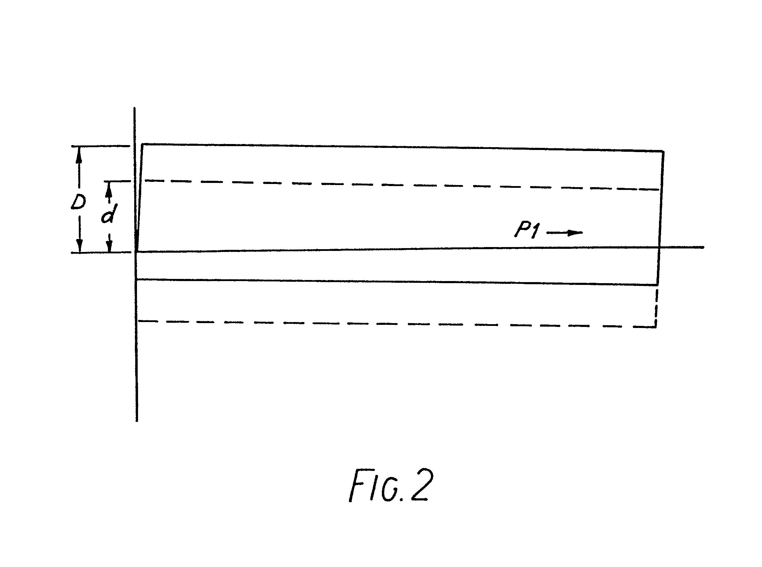

Referring to Fig. 2 of the drawings this shows in solid lines a typical plot of output pressure at the port 28 of a dual circuit control valve such as that of Fig. 1 without the resilient means 43 against the differential

0197678

between the pressures at ports 28 and 30, as ordinates. The position of such a plot in relation to the norizontal axis in Fig. 2 is displaceable in accordance with the force of resilient means provided by spring 43. The broken lines show the corresponding plot with spring 43 in place and it is immediately apparent that the differential 'd' is appreciably less than the differential 'D' wiout 43.

The effect of the frictional reaction means is to tend to further reduce magnitude of the differential excusion either side of the horizontal axes.

CLAIMS

1.     A two-circuit fluid pressure control valve having a housing (1) containing an input member (38) connected via first resilient coupling means (39) to a first fluid pressure responsive member (6) a first double valve (7,8,9) operable in dependence upon the position of said pressure responsive member to alternatively connect a first output port (28) to an input port (27) or to a vent (20) the pressure at said first output port (28) acting on said first pressure responsive member (6) in a sense to oppose the action of the resilient coupling means (39) and also acting on a second pressure responsive member (16) a second double valve (21,22,23) operable dependent upon the position of said second pressure responsive member (16) to alternatively connect a second output port (30) to an input port (29) or to a vent (20) the pressure at said second output port (30) acting on said second pressure responsive member (16) in a sense to oppose the action thereon of the pressure at the first output port (28) and characterised by further resilient coupling means (42, 43) operable only after an initial movement of the input member (38) to apply a mechanical force from the input member (38) to the second pressure responsive member (16) in a sense to operate the second valve (21,22,23) to connect the respective input port (29) to the second output port (30).

2.     A two-circuit fluid pressure control valve as claimed in claim 1, characterised by said further resilient coupling means (42,43) being operable to apply a said mechanical force from the input member (38)  via the first resilient coupling means.

3.     A two-circuit fluid pressure control valve as claimed in claims 1 or 2, the first pressure responsive means comprising a first piston (6) sealingly moveable in the housing (1) and having a cylindrical portion extending away from the first valve within which portion the input member (38) and the first resilient coupling means (39) are retained.

4.     A two-circuit fluid pressure control valve as claimed in claim 3, characterised by the first pressure responsive means (6) having a second cylindrical portion extending towards the first double valve and comprising a vent valve-seat (7) therefore said second resilient means (42,43) being captive within said second cylindrical portion and being engageable with an extension (55) of the second pressure responsive means (16) after said initial movement of the input member (38).

5.     A two-circuit fluid pressure control valve as claimed in claims 1, 2, 3 or 4 characterised by said first pressure responsive member (6) having a return spring (10) and additional means (49,50) being provided extending between the input member (38) and the second pressure responsive member (16) operable to transmit thereto at least a part of the force of said return spring (10) in a sense to cause the second pressure responsive member (16) to follow return movement of the input member (38).

6.    A two-circuit fluid pressure control valve as claimed in claims 1, 2, 3 or 4 characterised by additional means (49,50) extending between the input member (38) and the second pressure responsive member (16) operable mechanically to transmit thereto a force corresponding to forward movement of the input member .(38) in a sense to tend to urge the second pressure responsive member (16) to follow the input member (38).

7.    A two-circuit fluid pressure control valve as claimed in claim 5 or 6 said additional means comprising a frictional reaction link (50,52) between the second pressure responsive member (16) and the input member (38).

**FIG.1**

FIG.2

European Patent
Office

**EUROPEAN SEARCH REPORT**

0197678

Application number

EP  86 30 1907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 655 873  (WESTINGHOUSE) <br> * Page 4, line 18 - page 5, line 7; figure * <br> --- | 1 | B 60 T  15/06 |
| A | GB-A-2 133 097  (CLAYTON DEWANDRE) <br> --- | | |
| A | GB-A-1 039 837  (WAGNER) <br> ----- | | |

|  | TECHNICAL FIELDS SEARCHED (Int. Cl.4) |
|---|---|
| | B 60 T  15/04 <br> B 60 T  15/12 |

The present search report has been drawn up for all claims

| Place of search | Date of completion of the search | Examiner |
|---|---|---|
| THE HAGUE | 01-07-1986 | HARTEVELD C.D.H. |